# EUROPÄISCHE PATENTSCHRIFT

(11) **EP 0 821 498 B1**
(45) Veröffentlichungstag und Bekanntmachung des Hinweises auf die Patenterteilung: **20.11.2002**
(21) Anmeldenummer: 97111770.0
(22) Anmeldetag: 10.07.1997
(51) Int. Cl.: H04J 3/06, H04L 7/00, H04L 25/02

(54) **Taktversorgungssystem für elektronische Baugruppen**
Clock supply system for electronic units
Système d'alimentation d'horloge pour des unités électroniques

(30) Priorität: 26.07.1996 DE 19630400
(43) Veröffentlichungstag der Anmeldung: 28.01.1998
(73) Patentinhaber: SIEMENS AKTIENGESELLSCHAFT, 80333 München (DE)
(72) Erfinder: Kok, Jan, Dipl.-Ing., 81476 München (DE)

(56) Entgegenhaltungen:
- EP-A- 0 005 943
- US-A- 4 064 360
- PATENT ABSTRACTS OF JAPAN vol. 1995, no. 05, 30. Juni 1995 (1995-06-30) -& JP 07 046096 A (NEC IC MICROCOMPUT SYST LTD), 14. Februar 1995 (1995-02-14)
- BUSH D W: "HIGH SPEED DIFFERENTIAL DATA COMMUNICATION" WESCON TECHNICAL PAPERS,US,WESTERN PERIODICALS CO. NORTH HOLLYWOOD, Bd. 36, 17. November 1992 (1992-11-17), Seiten 26-29, XP000350070

## Beschreibung

Die Erfindung betrifft ein Taktversorgungssystem für die Versorgung von nicht in unmittelbarer Nähe einer zentralen Taktquelle angeordneten elektronischen Baugruppen mit Rechtecktaktimpulsen.

Ein bevorzugter Anwendungsfall für ein solches Taktversorgungssystem sind digitale Fernmeldevermittlungssysteme.

Die Baugruppen eines solchen Fernmeldevermittlungssystems benötigen für einen zeitgerechten Betrieb einen einheitlichen Takt, der von einem zentralen Taktgenerator in Form von Rechteckimpulsen geliefert und über ein Leitungssystem zur Taktverteilung den Baugruppen zugeführt wird.

Ein ähnliches Taktversorgungsystem, das einen ein Sinussignal erzeugenden Taktgenerator, einen Treiber, ein Taktverteilleitungsystem und Taktempfangsschaltungen aufweist, wurde schon in der Patentschrift US 4064360 offenbart (siehe Spalte 1, Zeile 65 - Spalte 2, Zeile 15 und Spalte 5, Zeile 22 - Zeile 41).

In den letzten Jahren sind die Anforderungen an die sogenannte elektromagnetische Verträglichkeit (EMV), d. h. an die Vermeidung von Störaussendungen (gestrahlt und leitungsgebunden) durch elektrische Anlagen und an die Immunität derselben gegen Störeinkopplungen bezüglich Amplitude und Frequenz immer strenger geworden.

Um diesen Anforderungen einigermaßen gerecht zu werden, wurde in der Vergangenheit versucht, durch Abschirmungsmaßnahmen bei den einzelnen Leitungen der Taktverteilsysteme wie auch zentraler Teile solcher Taktverteilsysteme die Störabstrahlungen gering zu halten. Dies ist mit erheblichen Kosten verbunden und erfordert zum Teil auch Neuentwicklungen von Systemteilen.

Die Aufgabe der Erfindung besteht daher darin, ein Taktversorgungssystem für die Versorgung von nicht in unmittelbarer Nähe einer zentralen Taktquelle angeordneten elektronischen Baugruppen anzugeben, durch das in weniger aufwendiger und vollkommenerer Weise die EMV-Bedingungen eingehalten werden können.

Diese Aufgabe wird mit einem Taktversorgungssystem gemäß dem Patentanspruch 1 gelöst.

Bei dem erfindungsgemäßen Taktversorgungssystem werden von dem zentralen Takterzeuger zwei gegenüber einem Bezugspotential symmetrische Sinussignale erzeugt und über ein Taktverteilleitungssystem an baugruppenindividuelle Taktempfangsschaltungen gegeben, durch die aus den zugeführten Sinussignalen ein erdunsymmetrisches Rechtecksignal, das eigentliche Taktsignal, erzeugt wird.

Dadurch, daß Sinussignale und nicht wie bisher Rechtecksignale auf dem Taktverteilleitungssystem übertragen werden, entfallen die Störstrahlungen, die bei der Übertragung von Rechteckimpulsen durch deren harmonische Frequenzanteile Zustandekommen.

Auf der Empfangsseite, d. h. also bei den zu versorgenden elektronischen Baugruppen ergibt sich schaltungstechnisch der Vorteil einer weniger problematischen Auswertung, da die Auswirkungen von Empfangsschwellenschwankungen sich kompensieren lassen.

Wegen der Weitergabe des durch den Taktgenerator erzeugten Sinussignals in Form zweier symmetrischer Signale über das Taktverteilleitungssystem bestehen elektromagnetische Felder lediglich zwischen den die beiden Sinussignale führenden Leitungen, die nur wenig voneinander beabstandet sind mit der Folge einer geringen Abstrahlungstendenz, wogegen bei unsymmetrischer Taktverteilung das elektromagnetische Feld sich praktisch erst im Unendlichen wieder schließt, also eine Störstrahlung erzeugt. Außerdem sind die Eingangsstufen der Baugruppen, die das ihnen zugeführte symmetrische Signal zur Rechtecksignalgenerierung auswerten, immun gegen Störeinkopplungen von außen (gestrahlt und leitungsgebunden), da diese immer auf beide symmetrische Leitungen wirken und damit longitudinaler Natur sind.

Die symmetrische Taktzuführung allein, also die Beibehaltung der Zufuhr von Rechteckimpulsen würde allerdings zur Störstrahlungsvermeidung nicht ausreichen, da es nicht möglich ist, für alle entstehenden Oberwellen ausreichend genau symmetrische Leitungsverhältnisse herzustellen.

Eine weitere Ausgestaltung der Erfindung ist in einem Unteranspruch angegeben. Es wird demnach für die Weitergabe der Sinussignale auf das Taktverteilleitungssystem ein zentraler Treiber mit gegenüber den Baugruppeneingängen niederohmigen Ausgängen verwendet und das Taktverteilleitungssystem durch eine entsprechende Abschlußimpedanz abgeschlossen. Hierdurch ist sichergestellt, daß nachträgliche Änderungen der Beschaltungsverhältnisse durch Hinzufügen oder Wegnahme von Baugruppen (Bestückungsoptionen) nicht zu spürbaren Impedanzsprüngen und somit zu Reflexionen führen, die Ursache von Störstrahlungen sind und Signalverfälschungen hervorrufen.

Nachstehend wird die Erfindung anhand eines Ausführungsbeispiels unter Bezugnahme auf eine Zeichnung noch näher erläutert.

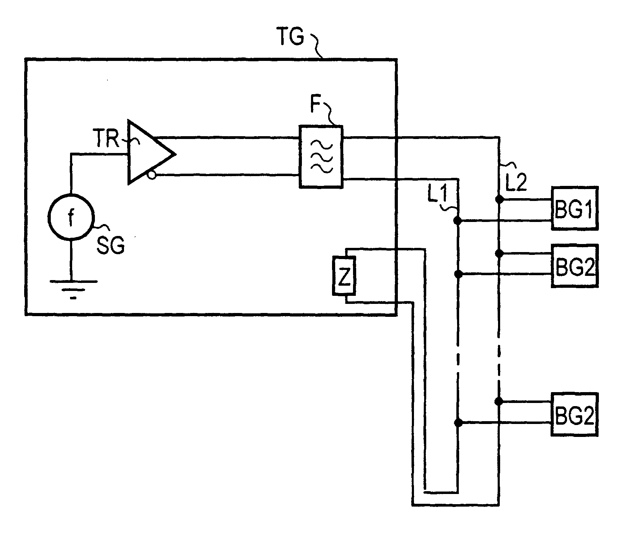

In der Figur sind eine Reihe von elektronischen Baugruppen BG1 bis BGn dargestellt, die für ihren Betrieb einen Takt benötigen.

Bei diesen Baugruppen kann es sich beispielsweise um digitale Leitungseinheiten im Anschlußbereich eines digitalen Fernmeldevermittlungssystems handeln, an die Teilnehmeranschlußleitungen bzw. Anschlußleitungen für Nebenstellenanlagen angeschlossen sind.

Zur Taktversorgung dieser Baugruppen ist eine zentrale Taktgeneratorbaugruppe TG vorgesehen. Diese Taktgeneratorbaugruppe enthält einen zentralen Taktgenerator SG, der ein Sinussignal erzeugt.

Als weiterer Bestandteil der zentralen Taktgeneratorbaugruppe ist ein zentraler Treiber TR vorgesehen, dem das vom Sinusgenerator SG erzeugte Sinussignal zugeführt wird und der daraus abgeleitet zwei gegenüber einem Bezugspotential, beispielsweise Erdpotential, symmetrische Sinussignale abgibt.

Diese Sinussignale werden über ein symmetrisches Taktverteilleitungssystem, das die Leitungen L1 und L2 umfaßt, an die Baugruppen BG1 bis BGn weitergeleitet.

Die zentrale Taktgeneratorbaugruppe TG enthält optional ein Filter F welches die Oberwellenreinheit (Klirrfaktor) des Sinussignals im Bedarfsfall garantiert . Ebenfalls optional ist eine Abschlußimpedanz Z der Leitungen L1 und L2 vorgesehen, die hier als Bestandteil der zentralen Taktgeneratorbaugruppe TG gezeigt ist.

Da zwischen dem Taktgenerator TG und den Baugruppen BG1 bis BGn Sinussignale übertragen werden, treten hier im Gegensatz zur Übertragung von Rechtecksignalen keine harmonischen der Grundfrequenz auf, so daß die Tendenz zur Entstehung von Störstrahlungen gering ist. Die Umwandlung dieser Sinusschwingungen in die eigentlichen Rechtecktaktimpulse erfolgt erst durch hier nicht dargestellte in die Baugruppen integrierte individuelle Empfangsschaltungen, die aus den beiden symmetrischen Sinussignalen ein unsymmetrisches Rechtecksignal erzeugen.

Durch die symmetrische Leitungsführung ist überdies erreicht, daß elektromagnetische Felder lediglich zwischen den beiden Leitungsadern L1 und L2 bestehen, womit theoretisch grundsätzlich eine Störstrahlung vermieden ist. Eine solche Symmetrie ließe sich im Falle der Übertragung von Rechteckimpulsen nicht bezüglich sämtlicher dann vorhandener Oberschwingungen realisieren, so daß die erwünschte Störstrahlungssicherheit tatsächlich nur durch die Kombination der Übertragung von Sinussignalen und der Symmetrie der Erzeugung und Übertragung derselben zu erreichen ist.

## Patentansprüche

1. Taktversorgungssystem für die Versorgung von nicht in unmittelbarer Nähe einer zentralen Taktquelle angeordnete elektronische Baugruppen (BG1 bis BGn) das einen zentralen, ein Sinussignal erzeugenden Taktgenerator (SG),
einen zentralen Treiber (TR), der das ihm zugeführte Sinussignal als zweier bezüglich eines Bezugspotentials symmetrischer Sinussignale weitergibt,
ein der Weiterleitung dieser beiden Sinussignale an die Baugruppen (BG1 bis BGn) dienendes symmetrisches Taktverteilleitungssystem (L1, L2)
sowie baugruppenindividuelle Taktempfangsschaltungen aufweist, die aus den ihnen zugeführten Sinussignalen ein erdunsymmetrisches Rechtecksignal erzeugen.

2. Taktversorgungssystem nach Anspruch 1, **dadurch gekennzeichnet, daß** der zentrale Treiber (TR) gegenüber den Baugruppeneingängen niederohmige Ausgänge aufweist.

## Claims

1. Clock supply system for supplying electronic modules (BG1 to BGn) not arranged in the immediate vicinity of a central clock source, which system has a central clock generator (SG) generating a sinusoidal signal, a central driver (TR) which relays the sinusoidal signal fed to it as two sinusoidal signals which are symmetrical with reference to a reference potential, a symmetrical clock distribution line system (L1, L2) serving for relaying these two sinusoidal signals to the modules (BG1 to BGn), and module-specific clock receiving circuits which generate an unbalanced-to-earth rectangular signal from the sinusoidal signals fed to them.

2. Clock supply system according to Claim 1, **characterized in that** the central driver (TR) has low-resistance outputs by comparison with the module inputs.

## Revendications

1. Système d'alimentation d'horloge pour alimenter des unités électroniques (BG1 à BGn) non disposées à proximité immédiate d'une source d'horloge centrale, comprenant
un générateur d'horloge central (SG) produisant un signal sinusoïdal,
un driver central (TR) qui transmet le signal sinusoïdal qui lui est amené comme deux signaux sinusoïdaux symétriques par rapport à un potentiel de référence,
un système symétrique de lignes de répartition de signaux d'horloge (L1, L2) servant à transmettre ces deux signaux sinusoïdaux aux unités (BG1 à BGn),
ainsi que des circuits de réception de signaux d'horloge propres à chaque unité, qui produisent à partir des signaux sinusoïdaux qui leur sont amenés un signal rectangulaire asymétrique par rapport à la terre.

2. Système d'alimentation d'horloge selon la revendication 1, **caractérisé en ce que** le driver central (TR) comprend des sorties de basse impédance par rapport aux entrées des unités.
